(19) Europäisches Patentamt
European Patent Office
Office européen des brevets

(11) EP 1 460 109 B1

(12) **FASCICULE DE BREVET EUROPEEN**

(45) Date de publication et mention de la délivrance du brevet:
**26.07.2006 Bulletin 2006/30**

(51) Int Cl.:
***C08L 77/00*** *(2006.01)* ***B32B 27/08*** *(2006.01)*
***B29C 33/68*** *(2006.01)*

(21) Numéro de dépôt: **04290606.5**

(22) Date de dépôt: **05.03.2004**

(54) **Mélanges de polyamide et de polyoléfine à matrice polyamide et contenant des nanocharges**

Polyamid-Polyolefinmischungen mit einem Polyamidmatrix und enthaltend Nanofüllstoffe

Mixtures of polyamide and polyolefine, the polyamide being the matrix, and comprising nanofillers

(84) Etats contractants désignés:
**AT BE BG CH CY CZ DE DK EE ES FI FR GB GR HU IE IT LI LU MC NL PL PT RO SE SI SK TR**

(30) Priorité: **17.03.2003 FR 0303234**

(43) Date de publication de la demande:
**22.09.2004 Bulletin 2004/39**

(73) Titulaire: **Arkema**
**92800 Puteaux (FR)**

(72) Inventeurs:
- **Flat, Jean-Jacques**
  **27170 Groupilleres (FR)**
- **Barriere, Benoît**
  **27170 Le Tilleul Othon (FR)**
- **Brule, Benoît**
  **27300 Bernay (FR)**

(74) Mandataire: **Neel, Henry et al**
**ARKEMA**
**Département Propriété Industrielle**
**4-8, cours Michelet,**
**La Défense 10**
**92091 Paris La Défense Cedex (FR)**

(56) Documents cités:
**EP-A- 0 506 515**
**EP-A- 0 766 913**
**EP-A- 0 990 515**
**EP-A- 0 997 268**
**EP-A- 1 022 314**
**WO-A-02/079318**
**US-A- 5 342 886**
**US-A- 6 117 932**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 460 109 B1

Printed by Jouve, 75001 PARIS (FR)

## Description

### Domaine de l'invention

La présente invention concerne l'utilisation de structures comprenant au moins une couche constituée de mélanges de polyamide et de polyoléfine à matrice polyamide et contenant des nanocharges. Ces mélanges sont thermoplastiques et peuvent être transformés en bouteilles, réservoirs, conteneurs, tuyaux et récipients de toute sorte. Ils peuvent aussi être transformés en films avec lesquels on fait des emballages. L'invention concerne aussi l'utilisation des structures comprenant au moins une couche de ces mélanges et au moins une couche d'un autre matériau. Ces structures peuvent se mettre sous forme de bouteilles, réservoirs, conteneurs, tuyaux et récipients de toute sorte. Elles peuvent aussi être transformées en films avec lesquels on fait des emballages.

Tous ces objets présentent de bonnes propriétés barrière. L'invention concerne aussi l'utilisation de ces objets. Par exemple les aliments conservés dans ces emballages sont protégés de l'oxygène de l'air et on évite leur dégradation alors qu'un emballage en polyéthylène laisse entrer un peu d'oxygène et les aliments se dégradent. Les propriétés barrière peuvent aussi être utilisées dans l'autre sens. Ainsi dans la technologie SMC (abréviation de Sheet Moulding Compound ou composition de moulage en feuille) une composition à base de polyester insaturé réticulable et de styrène est disposée entre deux films et il est nécessaire que le styrène reste dans la composition et ne diffuse pas au travers des films. On peut encore citer la barrière au pentane utile pour les emballages contenant des billes de polystyrène expansible. En effet ces billes contiennent du pentane et il est nécessaire que les billes ne perdent pas leur pentane avant leur transformation en polystyrène expansé. On peut encore citer les tuyaux dans lesquels circule les fluides frigorigènes de climatisation tels par exemple les HFA et les HFC. Dans un dispositif de climatisation on doit réduire les pertes de fluide aussi bien pour des raisons économiques (ces fluides sont coûteux) que pour des raisons de protection de l'environnement (une fuite excessive pourrait endommager la couche d'ozone). Les structures de l'invention sont utiles dans ces applications.

### L'art antérieur et le problème technique

Le SMC est utilisé dans la fabrication de pièces transformées aussi bien dans les domaines automobile (pare-chocs, hayons...) que ceux du nautisme (coques de bateaux) ou de l'électronique (carters). Le SMC est généralement composé d'une résine polymère réticulable, en particulier un polyester insaturé, de charges de renforcement telles que des fibres de verre, ainsi que de divers autres additifs en quantités peu importantes.

Le SMC est ordinairement préparé en déposant des fibres sur une couche de résine polyester non saturé, elle-même supportée sur un film mobile, composé en général de polyéthylène ou de polyamide. Un autre film de même nature est ensuite déposé au-dessus du système résine/charge de renforcement pour former une masse composite en sandwich entre deux films. Le sandwich passe ensuite à travers une série de rouleaux de pétrissage et de compactage et est généralement enroulé sous forme de grands rouleaux.

Il est alors stocké avant transformation ultérieure. Lors de la période de stockage, la résine polyester réticule partiellement, provoquant une augmentation de la viscosité du SMC, jusqu'à atteindre une consistance le rendant apte au moulage. Les utilisateurs de SMC, en général les mouleurs, coupent un morceau de dimensions appropriées à partir du rouleau, retirent par pelage le film de support et placent le SMC dans un moule chauffé pour la transformation et la cuisson complète simultanées. Ainsi, des masses composites en sandwich de SMC trouvent une application facile dans des modes opératoires de moulage par compression.

La technologie BMC (abréviation de Bulk Moulding Compound ou composition de moulage en vrac) est similaire sauf que le polyester à réticuler est soit en couche épaisse entre deux films soit en vrac dans un fût garni d'un film. Les compositions SMC et BMC contiennent du styrène.

Trois propriétés concernant le film sandwich sont d'importance capitale pour les fabricants et les utilisateurs de SMC.

La première a trait à la perméabilité au styrène du film pelable. Il est nécessaire que ce film pelable ait une perméabilité au styrène très faible afin d'éviter la perte de styrène monomère qui joue le rôle d'agent de réticulation dans le SMC. Cette perte de styrène monomère est également préjudiciable pour la santé des individus et l'environnement lors des opérations de fabrication du SMC et de son stockage.

La deuxième propriété concerne la facilité de pelage de ce film sur la structure polyester, afin qu'il ne subsiste pas de film résiduel sur la structure et d'éviter les risques de déchirure de ce film lors des opérations de fabrication et de transformation du SMC.

Enfin, la reprise d'humidité et la perméabilité à l'eau de ces films pelables doivent être très faibles pour que la qualité de la résine polyester, très sensible à l'eau, ne soit pas altérée lors des opérations de fabrication du SMC, du stockage du polyester ou de la transformation du SMC.

L'art antérieur a décrit de nombreux films mono ou multicouches ayant des propriétés barrières et utilisables

dans la technologie SMC mais aussi dans d'autres technologies telles que la fumigation. Le brevet EP 506515 décrit des films constitués d'un mélange de polyamide et de polyoléfine pour le SMC. Le brevet EP 766913 décrit l'utilisation de films constitués d'un mélange de polyamide et de polyoléfine pour la fumigation. La fumigation des sols consiste à traiter les sols par injection de gaz à environ 0,5 ou 1 m de profondeur puis on recouvre le sol à traiter d'un film pour que le gaz reste plus longtemps dans le sol, ce qui permet de réduire les quantités de gaz à utiliser. Le brevet EP 990515 décrit un film comprenant une couche centrale en polyoléfine et deux couches externes en un alliage polyamide/polyoléfine ayant une tension de surface peu différente de celle de la polyoléfine de l'alliage. Ces films sont utiles dans la technologie SMC et dans la fumigation. Le brevet EP 997268 décrit un film mono ou multicouches comprenant du polyéthylène métallocène, au moins une première couche d'un mélange de polyamide et de polyéthylène, éventuellement une deuxième couche de polyéthylène dans lequel le polyéthylène métallocène est dans la première et/ou dans la deuxième couche. Ces films sont utiles dans la technologie SMC et dans la fumigation. Aucun de ces documents ne décrit des mélanges de polyamide et de polyoléfine contenant des nanocharges ni leurs propriétés barrières.

On a maintenant trouvé que l'introduction de nanocharges dans des mélanges de polyamide et de polyoléfine conduisait à une augmentation des propriétés barrière beaucoup plus importante que si on introduisait les nanocharges dans le polyamide seul. Autrement exprimé si on compare des mélanges de polyamide et de polyoléfine et les mêmes mélanges de polyamide et de polyoléfine mais contenant des nanocharges l'augmentation des propriétés barrière est beaucoup plus importante que si on compare un polyamide et le même polyamide mais contenant des nanocharges. De plus les mélanges de polyamide et de polyoléfine contenant des nanocharges sont plus performants en valeur réelle de barrière que les mêmes polyamides contenant des nanocharges mais ne contenant pas de polyoléfine (la proportion de nanocharges par rapport au polyamide étant la même). Ces très bonnes propriétés barrière concernent de nombreuses technologies telles que par exemple le SMC, la fumigation, l'emballage du polystyrène expansible et les fluides de climatisation. La propriété de barrière à l'oxygène est utile dans l'emballage alimentaire.

## Brève description de l'invention

La présente invention concerne l'utilisation, pour obtenir un effet barrière, de structures comprenant au moins une couche constituée d'un mélange de polyamide (A) et de polyoléfine (B) contenant des nanocharges dans lesquels le polyamide forme la matrice et éventuellement au moins une couche d'un autre matériau.

Ces structures sont barrière à de nombreux fluides et en particulier à l'oxygène, au styrène, au fluides de fumigation, au pentane et aux fluides de climatisation.

Ces structures peuvent se mettre sous forme de bouteilles, réservoirs, conteneurs, tuyaux et récipients de toute sorte. Elles peuvent aussi être transformées en films avec lesquels on fait des emballages. Ces films sont aussi utiles dans l'emballage alimentaire, dans la technologie SMC, dans la fumigation et dans l'emballage du polystyrène expansible. Ces tuyaux sont utiles dans les dispositifs de climatisation.

L'invention concerne aussi l'utilisation de ces objets.

## Description détaillée de l'invention

**S'agissant du mélange de polyamide (A) et de polyoléfine (B) contenant des nanocharges on entend par polyamide** les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6 et le PA 6-6.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le $\beta,\beta$-diméthylpropriolactame, le $\alpha,\alpha$-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide

isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-$(CH_2)_{10}$-COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis (aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement le copolyamide est choisi parmi le PA 6 / 12 et le PA 6 / 6-6.

On peut utiliser des mélanges de polyamide. Avantageusement la viscosité relative des polyamides, mesurée en solution à 1% dans l'acide sulfurique à 20°C, est comprise entre 1,5 et 6.

On ne sortirait pas du cadre de l'invention en remplaçant une partie du polyamide (A) par un copolymère à blocs polyamide et blocs polyether, c'est à dire en utilisant un mélange comprenant au moins un des polyamides précédents et au moins un copolymère à blocs polyamide et blocs polyether.

Les copolymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inhérente entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne

pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60 / 40. On peut citer par exemple les mélanges de (i) PA 6 et (ii) copolymère à blocs PA 6 et blocs PTMG et des mélanges de (i) PA 6 et (ii) copolymère à blocs PA 12 et blocs PTMG.

On utilise avantageusement le PA 6, le PA 6-6 et le PA 6/6-6.

**Quant à la polyoléfine (B) du mélange de polyamide (A) et de polyoléfine (B)** elle peut être fonctionnalisée ou non fonctionnalisée ou être un mélange d'au moins une fonctionnalisée et/ou d'au moins une non fonctionnalisée. Pour simplifier on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth) acrylate de glycidyle, ou par des acides carboxyliques ou les sels ou esters correspondants tels que l'acide (méth) acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI de (A) , les MFI de (B1) et (B2) peuvent être choisis dans une large plage il est cependant recommandé pour faciliter la dispersion de (B) que les viscosités de (A) et de (B) soient peu différentes.

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi n'utiliser qu'un mélange de polyoléfines (B1) pour obtenir une réticulation.

Le mélange de polyamide (A) et de polyoléfine (B) contenant les nanocharges est à matrice polyamide. Habituellement il suffit que la proportion de polyamide du mélange de polyamide (A) et de polyoléfine (B) contenant les nanotubes de carbone soit d'au moins 40% en poids et de préference entre 40 et 75% et mieux entre 50 et 75% pour qu'il y ait une matrice polyamide. C'est le cas des trois premières formes preférées du mélange de polyamide et de polyoléfine. Dans la quatrième forme préférée la phase de polyoléfine est réticulée ce qui assure qu'il n'y a pas inversion de phase et qu'on reste en matrice polyamide.

**Selon une première forme préférée de l'invention** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé ou un anhydride d'acide carboxylique insaturé.

Selon une variante de cette première forme de l'invention la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé ou un anhydride d'acide carboxylique insaturé et (iii) un polymère (C'2) choisi parmi les élastomères, les polyéthylènes de très basse densité et les copolymères de l'éthylène.

**Selon une deuxième forme préférée de l'invention** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée de l'invention** la polyoléfine (B) comprend (i) un polyéthylène de type

EVA, LLDPE , VLDPE ou metallocene et (ii) un copolymère éthylène -(meth)acrylate d'alkyle -anhydride maléique.

**Selon une quatrième forme préférée de l'invention** la polyoléfine comprend deux polymères fonctionnalisés comprenant au moins 50 % en moles de motifs éthylène et pouvant réagir pour former une phase réticulée. Selon une variante le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

**S'agissant de la première forme** les proportions sont avantageusement les suivantes (en poids) :

60 à 70 % de polyamide,
5 à 15 % du mélange de (C1) et (C2) cogreffé
le complément en polyéthylène haute densité .

S'agissant du polyéthylène haute densité sa densité est avantageusement comprise entre 0,940 et 0,965 et le MFI entre 0.1 et 5 g/10 min. (190°C 2,16 kg).

Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène /propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/10 min. (190°C - 2,16 kg) de préférence 13 à 20.

Avantageusement le mélange de (C1) et (C2) cogreffés, est tel que le rapport $MFI_{10}$ / $MFI_2$ est supérieur à 18,5, $MFI_{10}$ désignant l'indice d'écoulement à 190°C sous une charge de 10 kg et $MFI_2$ l'indice sous une charge de 2,16 kg. Avantageusement le $MFI_{20}$ du mélange des polymères (C1) et (C2) cogreffés est inférieur à 24. $MFI_{20}$ désigne l'indice d'écoulement à 190°C sous une charge de 21,6 kg.

S'agissant de la variante de la première forme les proportions sont avantageusement les suivantes (en poids) :

60 à 70 % de polyamide,
5 à 10 % de (C2) greffé,
5 à 10 % de (C'2)
le complément en polyéthylène haute densité.

(C2) est avantageusement un EPR ou un EPDM, (C'2) est avantageusement un EPR contenant en poids 70 à 75% d'éthylène.

**S'agissant de la deuxième forme de l'invention** les proportions sont avantageusement les suivantes (en poids) :

60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule

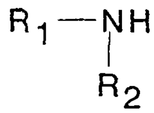

dans laquelle :

$R_1$ est l'hydrogène ou un groupement alkyle linéaire ou ramifié contenant jusqu'à 20 atomes de carbone,
$R_2$ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :

60 à 70 % de polyamide,
5 à 15 % d'un copolymère éthylène -(meth)acrylate d'alkyle -anhydride maléique.
le complément est un polyéthylène de type EVA, copolymère éthylène-(meth)acrylate d'alkyle, LLDPE , VLDPE ou metallocene; avantageusement la densité du polyethylene LLDPE, VLDPE ou métallocene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**S'agissant de la quatrième forme** les proportions sont avantageusement les suivantes (en poids) :

30 à 95 % de polyamide,
70 à 5 % d'un mélange d'un copolymère éthylène -(meth)acrylate d'alkyle -anhydride maléique et d'un copolymère éthylène -(meth)acrylate d'alkyle -methacrylate de glycidyle.

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

Le copolymère éthylène/(méth)acrylate d'alkyle/ methacrylate de glycidyle peut contenir jusqu'à 40% en poids de (méth)acrylate d'alkyle, avantageusement de 5 à 40 % et jusqu'à 20% en poids d'époxyde insaturé, de préférence 0,1 à 12%.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions époxy et anhydride, parmi les composés capables d'accélérer la réaction entre la fonction epoxy et la fonction anhydride on peut citer notamment :

- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylhydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine,
- des phosphines tertiaires telles que la triphénylphosphine
- des alkyldithiocarbamates de zinc.
- des acides.
- des acides aminés tels que par exemple l'acide amino-11 undecanoïque, l'acide aminocaproïque (provenant par exemple de l'ouverture du caprolactame) et l'acide amino-12 dodecanoïque (provenant par exemple de l'ouverture du lauryllactame).

On ne sortirait pas du cadre de l'invention si une partie du copolymère éthylène-(meth)acrylate d'alkyle-anhydride maleique est remplacée par un copolymère éthylène-acide acrylique ou un copolymère éthylène -anhydride maleique l'anhydride maleique ayant été en tout ou partie hydrolysé. Ces copolymères peuvent aussi comprendre un (meth) acrylate d'alkyle. cette partie peut représenter jusqu'à 30% du copolymère éthylène-(meth)acrylate d'alkyle-anhydride maleique.

**S'agissant des nanocharges** on désigne ainsi des particules de toute forme l'une au moins de leurs dimensions étant de l'ordre du nanomètre. Avantageusement ce sont des charges exfoliables lamellaires. En particulier, les charges exfoliables lamellaires sont des silicates et notamment des argiles traitées organophiles ; ces argiles qui se présentent sous forme de feuillets sont rendues organophiles par intercalation entre ceux-ci de molécules organiques ou polymères, et sont obtenues en particulier selon un procédé tel que décrit dans le brevet US 5,578,672 .

De préférence, les argiles utilisées sont du type smectite, soit d'origine naturelle comme notamment les montmorillonites, les bentonites, les saponites, les hectorites, les fluorohectorites, les beidellites, les stibensites, les nontronites, les stipulgites, les attapulgites, les illites, les vermiculites, les halloysites, les stevensites, les zéolithes, les terres à foulon et le mica, soit d'origine synthétique comme les permutites .

A titre d'exemple on peut citer les argiles organophiles décrites dans le brevet US 6117932. De préférence l'argile est modifiée avec une substance organique par une liaison ionique avec un ion onium ayant 6 atomes de carbone ou plus. Si le nombre d'atomes de carbone est inférieur à 6 l'ion onium organique est trop hydrophile et donc la compatibilité avec le polymère (le mélange de (A) et (B)) peut décroître. A titre d'exemple d'ion onium organique on peut citer les ions héxylammonium, les ions octylammonium, les ions 2-éthylhéxylammonium, les ions dodécylammonium, les ions laurylammonium, les ions octadecylammonium (stéarylammonium), les ions dioctyldiméthylammonium, les ions trioctylammonium, les ions distéaryldiméthylammonium, les ions stéaryltriméthylammonium et les ions laurate d'ammonium. Il est recommandé d'utiliser une argile ayant la plus grande surface possible de contact avec le polymère. Plus la surface de contact est grande plus la séparation des lamelles d'argile sera importante. La capacité d'échange cationique de l'argile est de préférence comprise entre 50 et 200 milliéquivalents pour 100g. Si la capacité est inférieure à 50 l'échange des ions oniums est insuffisant et la séparation des lamelles d'argile peut être difficile. Au contraire si la capacité est supérieure à 200 la force de liaison entre les lamelles d'argile est si forte que la séparation des lamelles peut être difficile. A titre d'exemple d'argile on peut citer la smectite, la montmorillonite, la saponite, l'hectorite, la beidellite, la stibensite,

la nontronite, la vermiculite, l'halloysite et le mica. Ces argiles peuvent être d'origine naturelle ou synthétique. La proportion d'ion onium organique est avantageusement entre 0,3 et 3 équivalent de la capacité d'échange ionique de l'argile. Si la proportion est inférieure à 0,3 la séparation des lamelles d'argile peut être difficile. Si la proportion est supérieure à 3 il peut y avoir dégradation du polymère. La proportion d'ion onium organique est de préférence entre 0,5 ef 2 équivalent de la capacité d'échange ionique de l'argile.

S'agissant de la proportion de nanocharges dans le mélange de polyamide et de polyoléfine elle peut être quelconque. Plus cette proportion est élevée meilleures sont les propriétés barrière. Avantageusement cette proportion est comprise entre 0,1 et 50 parties pour respectivement 100 parties de mélange de (A) et (B); et de préférence entre 0,5 et 10. On ne sortirait pas du cadre de l'invention en utilisant un mélange de nanocharges.

les mélanges de polyamide (A) et de polyolefine (B) contenant des nanocharges peuvent renfermer en outre au moins un additif choisi parmi :

- les colorants;
- les pigments ;
- les azurants ;
- les anti-oxydants ;
- les ignifugeants;
- les stabilisants UV.

Les compositions sont préparées soit par mélange de tous les ingrédients (A, B, nanocharges et additif éventuel) dans un procédé dit « en direct », soit en ajoutant les nanocharges et l'additif éventuel au mélange A/B déjà préparé soit encore en mélangeant un polyamide (A) contenant déjà des nanocharges avec une polyoléfine (B) ou un polyamide (A) avec une polyoléfine (B) contenant déjà des nanocharges ou toute combinaison de ces possibilités. Le polyamide contenant des nanocharges peut être obtenu lors de la polymérisation de son monomère (ou ses monomères) en présence des nanocharges ou par compoundage du polyamide et des nanocharges.

On utilise avantageusement les dispositifs habituels de mélange et de malaxage de l'industrie des thermoplastiques tels que les extrudeuses et les malaxeurs, par exemple les co-malaxeurs BUSS®.

**<u>Exemples</u>**

1-Cas de la perméabilité au styrène (application SMC et BMC)

Principe de la méthode de mesure : cellule de perméation couplée à un détecteur chromatographique permettant de quantifier la masse du perméant.
Perméant : Styrène
Température : 40°C
Echantillons : films de 25 microns obtenus par extrusion soufflage de gaine
Réalisation de 3 mesures par type de films.

Résultats :

On a utilisé les produits suivants:

**PA 6 B4** : désigne un PA 6 possédant une viscosité relative (à 1 % dans l'acide sulfurique) de 4.
**PA 6 nanocomposite** : désigne le Durethan KU2-2601 de Bayer® qui est un PA 6 possédant une viscosité de 177 à 199 ml/g selon ISO 307 enrichi de particules de nanoargiles.
**Orgalloy 1:** désigne un mélange de PA 6 et de LLDPE compatibilisé par un copolymère éthylène-acrylate de butyle-anhydride maléique en proportions poids respectivement 65/25/10.
**Orgalloy 1 nanocomposite :** désigne un mélange de **PA 6 nanocomposite** et de LLDPE compatibilisé par un copolymère éthylène-acrylate de butyle-anhydride maléique en proportions poids respectivement 65/25/10.
**Orgalloy 2:** désigne un mélange de PA 6, de polypropylène et d'un compatibilisant en proportions en poids respectivement 60/30/10. Le compatibilisant est un polypropylene sur lequel on a greffé de l'anhydride maléique puis qu'on a condensé avec un PA 6 monoaminé de masse molaire moyenne en poids de 2500g, il est décrit dans le brevet US 5342886.
**Orgalloy 2 nanocomposite :** désigne un mélange de **PA 6 nanocomposite**, de polypropylène et d'un compatibilisant en proportions en poids respectivement 60/30/10. Le compatibilisant est un polypropylene sur lequel on a greffé de l'anhydride maléique puis qu'on a condensé avec un PA 6 monoaminé de masse molaire moyenne en poids de 2500g, il est décrit dans le brevet US 5342886.

Les résultats des mesures de perméabilité au styrène sont reportées dans le tableau 1.

Tableau 1 : Flux au styrène mesuré à 40°C.

| Matériaux | Flux du styrène en g.mm/$m^2$.24h |
|---|---|
| PA 6 B4 | 0.2 |
| PA 6 nanocomposite | 0.13 |
| Orgalloy 1 | 0.2 |
| Orgalloy 1 nanocomposite | 0.03 |
| Orgalloy 2 | 0.25 |
| Orgalloy 2 nanocomposite | 0.1 |

Intrinsèquement, les Orgalloy 1 et 2 nanocomposite sont plus barrières que le PA6 nanocomposite. En particulier, l'Orgalloy 1 nanocomposite est plus de 4 fois plus barrière que le PA6 nanocomposite.

On a repris les résultats du tableau 1 et on a exprimé dans le tableau 2 les résultats sous forme de gain de perméabilité. Le bénéfice du couplage des technologies "mélange de polyamide et de polyoléfine" et "nanocomposite" est visible dans le tableau 2 qui mentionne la réduction de la perméabilité associée à l'effet nanocomposite.

Tableau 2 : Réduction de la perméabilité au styrène associée à l'effet nanocomposite.

| | Réduction de la perméabilité |
|---|---|
| Passage PA 6 au PA 6 nanocomposite | 35% |
| Passage de Orgalloy 1 au Orgalloy 1 nanocomposite | 85% |
| Passage de Orgalloy 2 au Orgalloy 2 nanocomposite | 60% |

Les réductions de perméabilité sont largement plus importantes (facteur 2 à 3) dans le cas d'un couplage des technologies "mélange de polyamide et de polyoléfine" et "nanocomposite" par rapport au cas nanocomposite seul (passage du PA 6 au PA 6 nanocomposite).

## Revendications

1. Utilisation, pour obtenir un effet barrière, de structures comprenant au moins une couche constituée d'un mélange de polyamide (A) et de polyoléfine (B) contenant des nanocharges dans lesquels le polyamide forme la matrice et éventuellement au moins une couche d'un autre matériau.

2. Utilisation selon la revendication 1 dans laquelle la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé ou un anhydride d'acide carboxylique insaturé.

3. Utilisation selon la revendication 1 dans laquelle la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé ou un anhydride d'acide carboxylique insaturé et (iii) un polymère (C'2) choisi parmi les élastomères, les polyéthylènes de très basse densité et les copolymères de l'éthylène.

4. Utilisation selon la revendication 1 dans laquelle la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

5. Utilisation selon la revendication 1 dans laquelle la polyoléfine (B) comprend (i) un polyéthylène de type EVA, LLDPE , VLDPE ou metallocene et (ii) un copolymère éthylène -(meth)acrylate d'alkyle -anhydride maléique.

6. Utilisation selon la revendication 1 dans laquelle la polyoléfine comprend deux polymères fonctionnalisés comprenant au moins 50 % en moles de motifs éthylène et pouvant réagir pour former une phase réticulée.

7. Utilisation selon l'une quelconque des revendications précédentes dans laquelle la proportion de nanocharges est comprise entre 0,1 et 50 parties pour respectivement 100 parties de mélange de (A) et (B).

8. Utilisation selon l'une quelconque des revendications précédentes dans laquelle les structures sont des bouteilles, réservoirs, conteneurs, tuyaux et récipients.

9. Utilisation selon l'une quelconque des revendications 1 à 7 dans laquelle les structures sont des films.

## Claims

1. Use, for obtaining a barrier effect, of structures comprising at least one layer consisting of a polyamide (A) and polyolefin (B) blend containing nanofillers in which the polyamide forms the matrix and optionally at least one layer of another material.

2. Use according to Claim 1, in which the polyolefin (B) comprises (i) a high density polyethylene (HDPE) and (ii) a blend of a polyethylene (C1) and a polymer (C2) chosen from elastomers, very low-density polyethylenes and copolymers of ethylene, the (C1) + (C2) blend being cografted with an unsaturated carboxylic acid or an unsaturated carboxylic acid anhydride.

3. Use according to Claim 1, in which the polyolefin (B) comprises (i) a high-density polyethylene (HDPE), (ii) a polymer (C2) chosen from elastomers, very low-density polyethylenes and the copolymers of ethylene (C2) being grafted with an unsaturated carboxylic acid or an unsaturated carboxylic anhydride and (iii) a polymer (C'2) chosen from elastomers, very low-density polyethylenes and copolymers of ethylene.

4. Use according to Claim 1, in which the polyolefin (B) comprises (i) polypropylene and (ii) a polyolefin which results from the reaction of a polyamide (C4) with a copolymer (C3) comprising propylene and a grafted or copolymerized, unsaturated monomer X.

5. Use according to Claim 1, in which the polyolefin (B) comprises (i) a polyethylene of the EVA, LLDPE, VLDPE or metallocene type and (ii) an ethylene-alkyl (meth)acrylate-maleic anhydride copolymer.

6. Use according to Claim 1, in which the polyolefin comprises two functionalized polymers comprising at least 50 mol% of ethylene units and which can react to form a crosslinked phase.

7. Use according to any one of the preceding claims, in which the proportion of nanofillers is between 0.1 and 50 parts per respectively 100 parts of (A) and (B) blend.

8. Use according to any one of the preceding claims, in which the structures are bottles, reservoirs, containers, pipes and vessels.

9. Use according to any one of Claims 1 to 7, in which the structures are films.

## Patentansprüche

1. Verwendung von Konstruktionen mit mindestens einer Schicht aus einer Nanofüllstoffe enthaltenden Mischung von Polyamid (A) und Polyamid (B), worin das Polyamid die Matrix bildet, und gegebenenfalls mindestens einer Schicht aus einem anderen Material zur Erzielung einer Barrierewirkung.

2. Verwendung nach Anspruch 1, bei der das Polyolefin (B) (i) ein Polyethylen hoher Dichte (HDPE) und (ii) eine Mischung von einem Polyethylen (C1) und einem unter Elastomeren, Polyethylenen sehr niedriger Dichte und Copolymeren von Ethylen ausgewählten Polymer (C2) umfaßt, wobei die Mischung von (C1) + (C2) mit einer ungesättigten Carbonsäure oder einem ungesättigten Carbonsäureanhydrid cogepfropft ist.

3. Verwendung nach Anspruch 1, bei der das Polyolefin (B) (i) ein Polyethylen hoher Dichte (HDPE), (ii) ein unter Elastomeren, Polyethylenen sehr niedriger Dichte und Copolymeren von Ethylen ausgewähltes Polymer (C2), das mit einer ungesättigten Carbonsäure oder einem ungesättigten Carbonsäureanhydrid cogepfropft ist, und (iii) ein unter Elastomeren, Polyethylenen sehr niedriger Dichte und Copolymeren von Ethylen ausgewähltes Polymer (C'2) umfaßt.

4. Verwendung nach Anspruch 1, bei der das Polyolefin (B) (i) Polypropylen und (ii) ein Polyolefin, das sich aus der Umsetzung eines Polyamids (C4) mit einem Copolymer (C3), das Propylen und ein gepfropftes oder copolymerisiertes ungesättigtes Monomer X enthält, ergibt, umfaßt.

5. Verwendung nach Anspruch 1, bei der das Polyolefin (B) (i) ein Polyethylen vom EVA-, LLDPE-, VLDPE-oder Metallocen-Typ und (ii) ein Ethylen-Alkyl-(meth)acrylat-Maleinsäureanhydrid-Copolymer umfaßt.

6. Verwendung nach Anspruch 1, bei der das Polyolefin zwei funktionalisierte Polymere, die mindestens 50 Mol-% Ethylen-Einheiten enthalten und zu einer vernetzten Phase reagieren können, umfaßt.

7. Verwendung nach einem der vorhergehenden Ansprüche, bei der der Nanofüllstoff-Anteil zwischen 0,1 und 50 Teilen auf jeweils 100 Teile der Mischung von (A) und (B) liegt.

8. Verwendung nach einem der vorhergehenden Ansprüche, bei der es sich bei den Konstruktionen um Flaschen, Tanks, Behälter, Rohre und Gefäße handelt.

9. Verwendung nach einem der Ansprüche 1 bis 7, bei der es sich bei den Konstruktionen um Folien handelt.